# EUROPEAN PATENT SPECIFICATION

(11) **EP 0 478 307 B1**
(45) Date of publication and mention of the grant of the patent: **13.09.1995**
(21) Application number: 91308750.8
(22) Date of filing: 25.09.1991
(51) Int. Cl.: B60T 8/42, B60T 8/26

(54) **Hydraulic braking pressure control system**
Hydraulisches Bremsdruckregelsystem
Système de contrôle de pression hydraulique de freinage

(30) Priority: 25.09.1990 JP 254731/90
(43) Date of publication of application: 01.04.1992
(73) Proprietor: NISSIN KOGYO CO., LTD., Ueda-shi, Negano-ken (JP); HONDA GIKEN KOGYO KABUSHIKI KAISHA, Minato-ku Tokyo 107 (JP)
(72) Inventor: Tamai, Naotoshi, c/o Nissin Kogyo Co., Ltd., Ueda-shi, Nagano-ken (JP); Sugimoto, Yoichi, c/o Kabushiki Kaisha Honda, Wako-shi, Saitama-ken (JP); Iwagawa, Yoshihiro, c/o Kabushiki Kaisha Honda, Wako-Shi, Saitama-ken (JP); Go, Kougyoku, c/o Kabushiki Kaisha Honda, Wako-shi, Saitama-ken (JP)
(74) Representative: Bedggood, Guy Stuart

(56) References cited:
- EP-A- 0 209 278

## Description

The field of the present invention concerns hydraulic braking pressure control systems for rear wheel brakes, of a type comprising an output chamber defined in a housing to lead to a rear wheel brake wheel cylinder, a control chamber defined in the housing and connected to a hydraulic control pressure source and a reservoir through a switchover valve means which is operable to selectively connect and disconnect the hydraulic control pressure source and the reservoir to the control chamber, a control piston having opposite ends facing the output chamber and the control chamber, respectively, a partition wall provided in the housing for partitioning an output chamber from an input chamber which is defined in the housing and which leads to a master cylinder, and a cut-off valve interposed between the input and output chambers and adapted to be closed in response to movement of the control piston towards the control chamber.

Such a hydraulic pressure control system is conventionally known, for example, from Japanese Patent Application Laid-open No.222354/85.

In such a hydraulic braking pressure control system, it is necessary to cope with the case where hydraulic control pressure from the hydraulic control pressure source may fail or be reduced for any reason. In the above prior art, when hydraulic control pressure fails, the cut-off valve is opened to permit a hydraulic braking pressure from the master cylinder to be applied to a brake device.

However if as a result of a defect in the hydraulic control supply the control piston is permitted to move in a direction such as to reduce the volume of the control chamber, i.e., in a direction to increase the volume of the output chamber, then it is difficult to increase the braking pressure applied to the brake cylinder. In view of this, a hydraulic braking pressure control system has been proposed in Japanese Patent Application Laid-open No. 107435/85 in which the control chamber is brought into a tightly closed state when a defect in the control pressure occurs. In this system, however, when the control pressure is lost, closing of the cut-off valve is permitted, which means that a passage for connecting the input and output chambers, bypassing the cut-off valve, must be opened. The provision of such a passage and of means for opening and closing the passage in addition to the cut-off valve results in a complicated construction.

Thereupon, the present applicant has already proposed a hydraulic braking pressure control system as shown in Japanese Utility Model Application No. 132318/89, in which the cut-off valve can be opened and the control chamber can be closed tightly with a simple construction when the hydraulic control pressure is lost.

In a brake device for a passenger vehicle, it is usual to reduce the braking pressure for the rear wheels, as compared with the braking pressure for the front wheels, in order to enhance the braking effect. For providing such a reduction in the braking pressure for the rear wheels, a proportional pressure-reducing valve is interposed between the hydraulic braking pressure control system and the rear wheel brake cylinder. If it were to be possible to provide the hydraulic braking pressure control system with the function of the proportional pressure reducing valve, then the valve would be unnecessary, and this would contribute to a reduction in the number of parts.

In EP 0 209 278 there is described a brake system which includes a pressure conscious reducing valve for supplying the hydraulic pressure to the rear wheel brakes at a rate of pressure increase less than the rate at which the pressure applied to the front wheel brakes increases. The pressure conscious reducing valve comprises a valve seat piston, a valve member and a first spring. The valve seat piston has a pressure-receiving area facing the output chamber which is larger than the pressure-receiving area facing the input chamber leading to the master cylinder. The valve member is biased by a second spring in a direction so that it sits on a valve seat provided on the valve seat piston. The first spring biases the valve seat piston in a direction away from the valve member. In this condition, a probe serves to isolate the valve member from the valve seat so as to open the valve . With this arrangement, when the hydraulic pressure is introduced from the master cylinder into the input chamber, the hydraulic pressure passes through the valve into the output chamber. At this time, the valve member is isolated from the valve seat by means of the probe. As the hydraulic pressure in the output chamber overcomes the total force of the first spring and the hydraulic pressure in the input chamber, the valve seat piston moves in a direction such that the valve member sits on the valve seat. This operation is caused by the difference between the pressure-receiving areas of the opposite ends of the valve seat piston. After the valve member is seated on the valve seat so as to close the valve, the hydraulic pressure in the input chamber is further increased as the brake pedal is depressed. When the hydraulic pressure in the input chamber supported by the force of the first spring overcomes the hydraulic pressure in the output chamber, the valve opens again by movement of the valve seat piston in a direction away from the valve member. This opening and closing operation of the valve is repeated to reduce the rate of increase of the hydraulic pressure applied to the rear wheel brake. However, if the hydraulic control pressure introduced into the control chambers from the hydraulic control pressure source is lost, the control pistons move back towards the control chambers thereby retracting the probe so as that the valve member sits on the valve seat. Thus, the valve is closed and no hydraulic pressure can be supplied to the wheel brakes.

It is an object of the present invention to provide a hydraulic braking pressure control system for a rear wheel brake in which the cut-off valve can be opened and the control chamber can be tightly closed with a simple construction when the hydraulic control pressure is lost, and in which the cut-off valve is provided with a proportional pressure reducing function, thus making the provision of a proportional pressure-reducing valve unnecessary.

According to the present invention there is provided a control device for a hydraulic brake, comprising
an output chamber defined in a housing for connection to a rear wheel brake cylinder;
a control chamber defined in the housing and capable of being connected to a hydraulic control pressure source and a reservoir through a switchover valve means operable to selectively connect and disconnect the hydraulic control pressure source and the reservoir;
a control piston having opposite ends facing the output chamber and the control chamber respectively;
a partition wall provided in the housing partitioning the output chamber from an input chamber which is defined in the housing for connection to a master cylinder; and
a cut-off valve interposed between the said input and output chambers and adapted to be closed in response to movement of the control piston towards the control chamber, wherein
the cut-off valve includes a valve seat piston having a valve seat at the input chamber end and being of generally stepped-cylindrical form so that its pressure-receiving area facing the input chamber is smaller than its pressure -receiving area facing the output chamber;
a valve member is disposed in the input chamber and is biased in a direction towards the valve seat;
a rod transmits the operation of the control piston to the valve member; and
a spring is interposed between the housing and the valve seat piston so as to bias the valve seat piston towards the output chamber; characterised in that
the valve seat piston is moveable in a direction away from the valve member in response to a reduction in hydraulic pressure from the hydraulic control pressure source; and
the cut-off valve further includes a stop provided between the housing and the valve member so as to restrain movement of the valve member in said direction at a position where the valve member is spaced from the valve seat when the valve seat piston moves away from the valve member in response to the reduction in hydraulic pressure from the hydraulic control pressure source.

In a preferred embodiment, the control device additionally includes
a sleeve slidably received in the housing, wherein a first of the opposite end portions of the sleeve faces a pilot chamber leading to the hydraulic control pressure source, a second of the opposite end portions of the sleeve faces the said output chamber, and the control piston is slidably received in the sleeve so that one of its opposite end portions faces the output chamber and another of its opposite end portions faces the control chamber which is defined between the control piston and the sleeve; and
a lock valve interposed between the control chamber and the switchover valve means and adapted to be closed in response to movement of the sleeve in a direction reducing the volume of the pilot chamber, wherein
the valve seat piston is slidably received in the partition wall so that the end of the valve seat piston closer to the output chamber can be operatively connected to said second of the opposite end portions of the sleeve and the spring interposed between the housing and the valve seat piston provides an operative connection between the valve seat piston and said second of the opposite end portions of the sleeve.

With the above embodiment, when the hydraulic control pressure from the hydraulic control pressure source is normal, the sleeve is in a position in which it is moved to the maximum towards the output chamber by the hydraulic pressure in the pilot chamber leading to the hydraulic control pressure source. In this condition, the cut-off valve is opened and closed by the hydraulic control pressure applied to the control chamber, and therefore the hydraulic braking pressure to be applied to the rear wheel brake cylinder can be controlled by controlling the operation of the switchover valve means in the condition where hydraulic braking pressure is being delivered from the master cylinder. Moreover, because the pressure-receiving area of the valve seat piston facing the output chamber is larger than the pressure-receiving area thereof facing the input chamber when the cut-off valve is open, the valve seat piston is movable axially in accordance with the output pressure from the master cylinder, thereby opening and closing the cut-off valve. Therefore, the hydraulic pressure in the input chamber is reduced at a given proportion and applied to the output chamber. This ensures that the output pressure from the master cylinder can be reduced and applied to the rear wheel brake cylinder. Thus, the conventional proportional pressure-reducing valve can be omitted, which contributes to a reduction in the number of parts.

When hydraulic control pressure from the hydraulic control pressure source fails, the sleeve and the control piston are moved in a direction to increase the volume of the output chamber in response to the application of hydraulic braking pressure from the master cylinder to the output chamber, and the valve seat piston and the valve member are moved by the hydraulic pressure in the input chamber. Thus, the lock valve is closed. In the cut-off valve, after the movement of the valve member has been restrained by the stop, the valve seat piston is moved in a manner to follow the sleeve, thereby bringing the cut-off valve into an opened state. As a result, a braking force in the rear wheel brake can be ensured.

The above and other objects, features and advantages of the invention will become apparent from a reading of the following description of the preferred embodiments, taken in conjunction with the accompanying drawings.

For a better understanding of the invention and to show how the same may be carried into effect, reference will now be made, by way of example, to the accompanying drawings, in which:;
Figs. 1 to 3 illustrate a first embodiment of the present invention, wherein
Fig.1 is a diagram of a hydraulic braking pressure circuit for a vehicle;
Fig.2 is a longitudinal sectional view of a hydraulic braking pressure control system for a rear wheel brake; and
Fig.3 is a longitudinal sectional view of a hydraulic braking pressure control system for a front wheel brake;
Figs.4 to 7 illustrate a second embodiment of the present invention, wherein

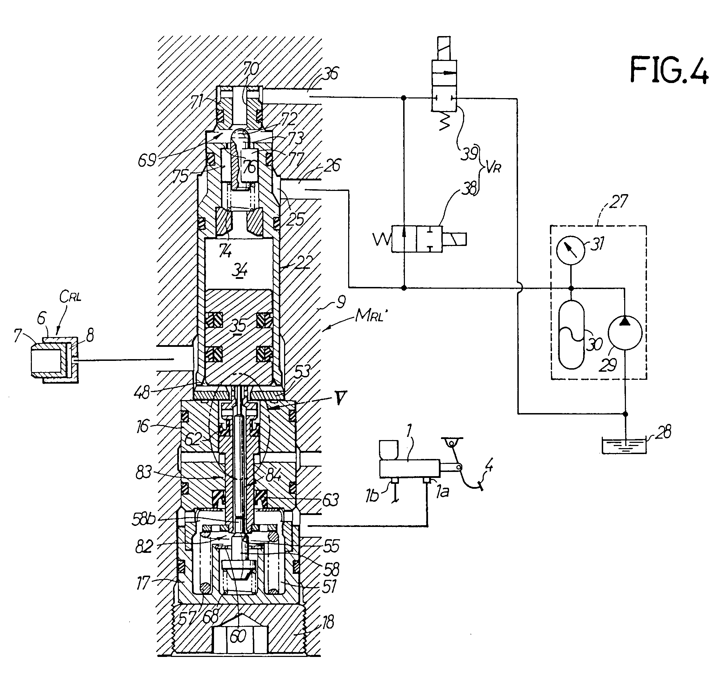

Fig.4 is a longitudinal sectional view of a hydraulic braking pressure control system for a rear wheel brake;

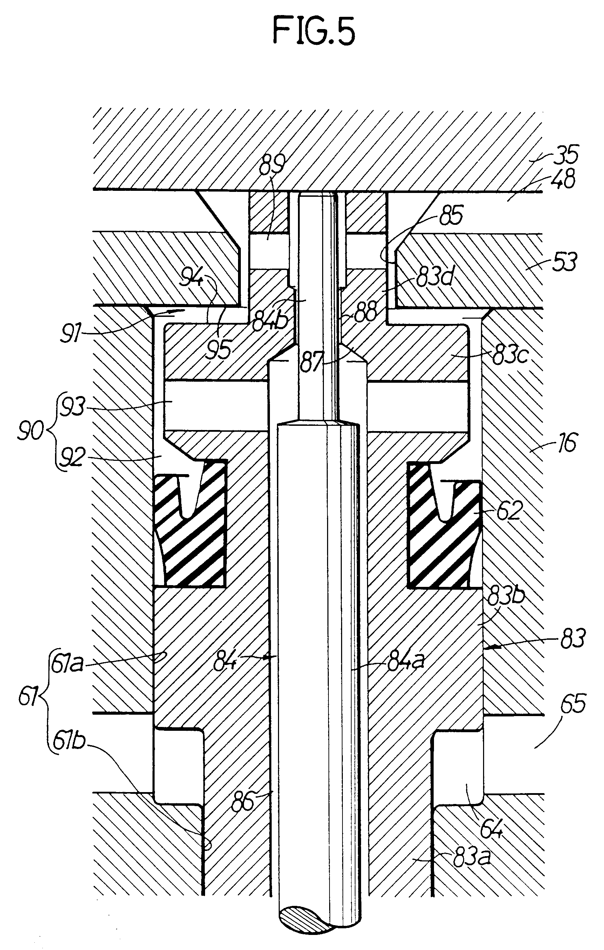

Fig.5 is an enlarged view of the portion indicated by V in Fig.4;

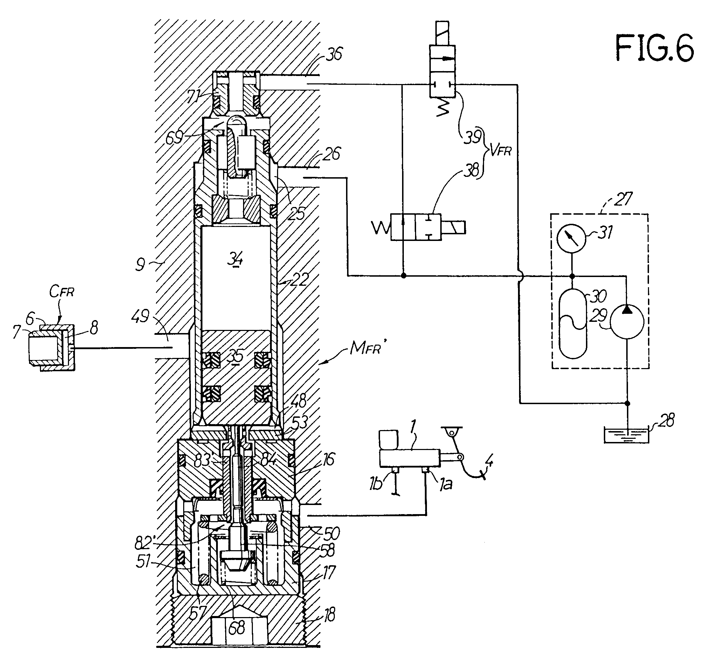

Fig.6 is a longitudinal sectional view of a hydraulic braking pressure control system for a front wheel brake; and

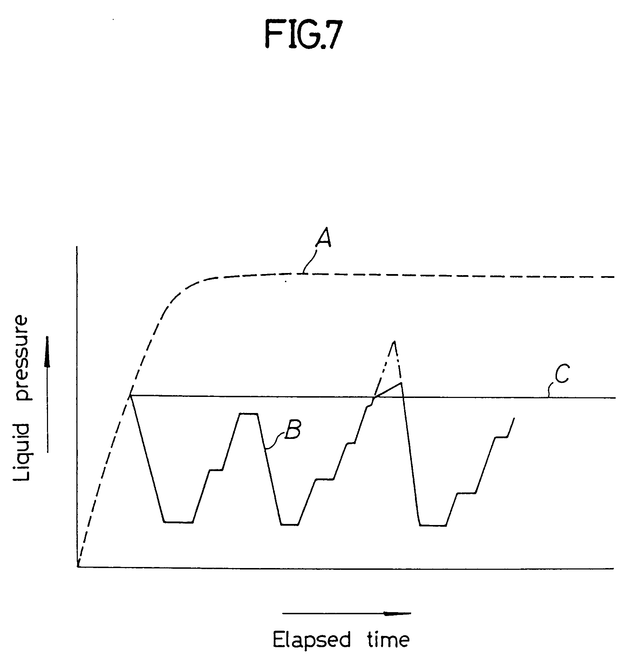

Fig.7 is a diagram illustrating the characteristics of the hydraulic braking pressure during an anti-lock control operation.

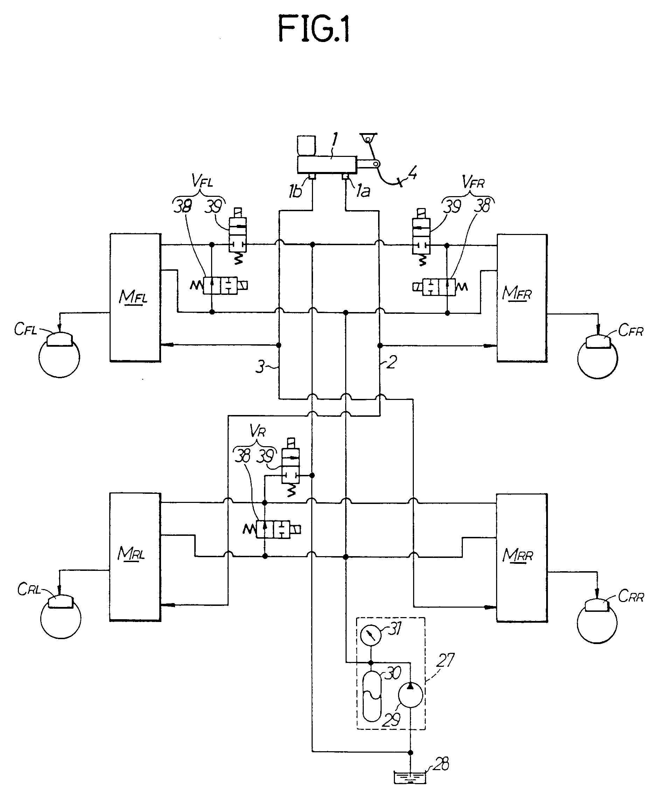

The present invention will now be described by reference to the first embodiment shown in Figs.1 to 3.

Referring first to Fig.1, brake cylinders C_{FL}, C _{FR}, C _{RL} and C_{RR} are mounted on front and rear, left and right wheels of a vehicle for exhibiting a braking force, respectively. A hydraulic braking pressure output passage 2 is connected to one output port 1a of a tandem type master cylinder 1, while a hydraulic braking pressure output passage 3 is connected to another output port 1b. A hydraulic braking pressure control system M _{FR} for the right front wheel brake and a hydraulic braking pressure control system M _{RL} for the left rear wheel brake are interposed between the hydraulic braking pressure output passage 2 and the right front wheel brake cylinder C _{FR} and the left rear wheel brake cylinder C _{RL}, respectively. A hydraulic braking pressure control system M _{FL} for the left front wheel brake and a hydraulic braking pressure control system M _{RR} for the right rear wheel brake are interposed between the hydraulic braking pressure output passage 3 and the left front wheel brake cylinder C _{FL} and the right rear wheel brake cylinder C _{RR} , respectively .

The left and right front wheel brake hydraulic braking pressure control systems M_{FL} and M_{FR} are capable of transmitting a hydraulic braking pressure delivered from the output ports 1a and 1b of the master cylinder 1 in response to depression of a brake pedal 4 to the left and right front wheel brake cylinders C _{FL} and C_{FR} during normal braking, and control the hydraulic braking pressure applied to the wheel cylinders C _{FL}, C _{FR} in response to the operation of switchover valve means V _{FL} and V _{FR} which are provided corresponding to the left and right front wheel brake hydraulic braking pressure control systems M_{FL} and M_{FR}, respectively, during anti-lock control. The left and right rear brake hydraulic braking pressure control systems M _{RL} and M_{RR} are capable of reducing and transmitting the hydraulic braking pressure delivered from the output ports 1a and 1b of the master cylinder 1 in response to depression of the brake pedal 4 to the left and right rear wheel brake cylinders C _{RL} and C_{RR} during normal braking, and control the hydraulic braking pressure applied to the brake cylinders C _{RL} and C_{RR} in response to the operation of a switchover valve means V _{R} common to the hydraulic braking pressure control systems M_{RL} and M_{RR} during anti-lock control.

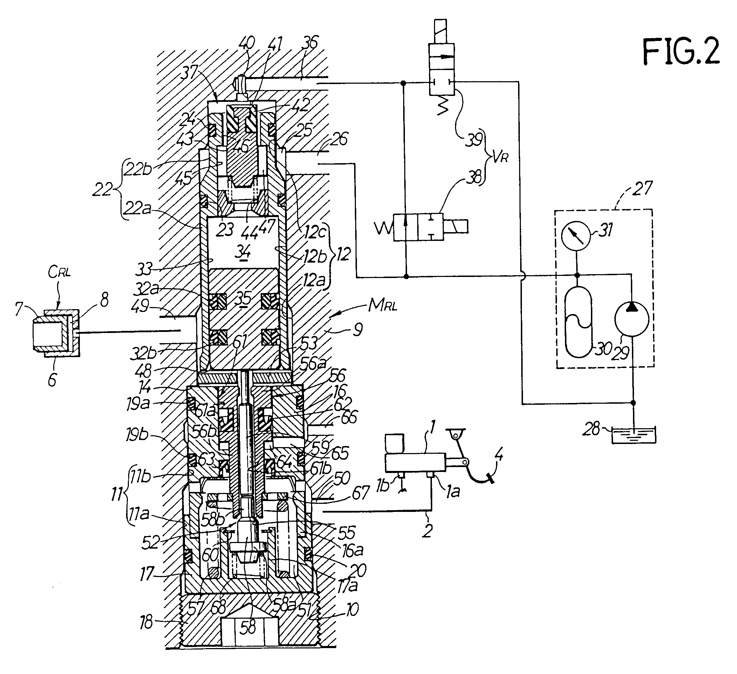

Referring also to Fig.2, the left rear wheel brake cylinder C _{RL} comprises a cylinder body 6, and a braking piston 7 slidably received in the cylinder body 6. A braking force is generated by a hydraulic braking pressure applied to a hydraulic braking pressure chamber 8 defined between the cylinder body 6 and the piston 7. The other brake cylinders C _{FL}, C _{FR} and C_{RR} also have basically the same construction as the left rear wheel brake cylinder C_{RL}.

The left rear brake hydraulic braking pressure control system M_{RL} has a housing 9 which is coaxially provided, in sequence from one end (the lower end in Fig.2), with a threaded bore 10, a mounting bore 11 connected to the threaded bore 10, and a slide bore 12. The mounting bore 11 is comprised of a first bore portion 11a having a diameter smaller than that of the threaded bore 10 and connected at the lower end to the threaded bore 10, and a second bore portion 11b having a diameter smaller than that of the first bore portion 11a and connected at the lower end to the first bore portion 11a. The slide bore 12 is composed of a large diameter bore portion 12a connected to the mounting bore 11 with a step 14 facing the lower end, a mean diameter bore portion 12b having a diameter smaller than that of the larger diameter bore portion 12a, and a smaller diameter bore portion 12c having a diameter smaller than that of the mean diameter bore portion 12b. The bore portions 12a, 12b and 12c are connected to one another from the lower end.

A cylindrical member is fitted into the second bore portion 11b of the mounting bore 11 to provide a partition wall 16, and a cylindrical support member 17 having a closed end is fitted into the first bore portion 11a with its closed end facing the lower end. Further, a plug 18 is screwed into the threaded bore 10. Moreover, the partition wall 16 is integrally provided, at one end (its lower end) with a cylindrical fitting portion 16a which projects towards the lower end and fits into the support member 17. The other (upper) end of the partition wall 16 abuts against the step 14. By screwing the plug 18 into the threaded bore 10 until it abuts against the support member 17, the partition wall 16 and the support member 17 are clamped between the step 14 and the plug 18 and fixed in the mounting bore 11. Further, a pair of O-rings 19a and 19b are fitted, spaced apart from each other, in the outer surface of the partition wall 16 and contact the inner surface of the second bore portion 11b, and an O-ring 20 is fitted in the outer surface of the support member 17 and contacts the inner surface of the first bore portion 11a.

A sleeve 22 is slidably received in the slide bore 12 and comprises a large diameter portion 22a corresponding to the mean diameter bore portion 12b, and a small diameter portion 22b corresponding to the small diameter bore portion 12c. These portions 22a and 22b are coaxially connected to each other. An O-ring 23 is fitted in the outer surface of the large diameter portion 22a in sliding contact with the inner surface of the mean diameter bore portion 12a, while an O-ring 24 is fitted in the outer surface of the small diameter portion 22b in sliding contact with the inner surface of the small diameter bore portion 12c. An annular pilot chamber 25, towards which a first of the opposite end portions (the upper portion) of the sleeve 22 faces, is defined between the outer surface of the first end portion of the sleeve 22 and the inner surface of the slide bore 12 in the vicinity of the connection between the mean diameter bore portion 12b and the small diameter bore portion 12c. The second of the opposite end portions of the sleeve 22 (the lower portion) faces the output chamber 48. The pilot chamber 25 is connected to a hydraulic control pressure source 27 through a pilot port 26 provided in the housing 9.

The hydraulic control pressure source 27 comprises a hydraulic pump 29 for pumping a control liquid from a reservoir 28, an accumulator 30 connected to the hydraulic pump 29, and a pressure switch 31 for controlling the operation of the hydraulic pump 29. The hydraulic control pressure source 27 supplies a constant hydraulic control pressure which is higher than the hydraulic braking pressure delivered from the master cylinder 1.

The sleeve 22 is provided with a cylinder bore 33 which is open at the lower end of the large diameter portion 22a of the sleeve 22, and a control piston 35 is slidably received in the cylinder bore 33 to define a control chamber 34 between the control piston itself and the sleeve 22. The control piston 35 has opposite ends with one of these ends facing the control chamber 34 and the other of these ends facing the output chamber 48. Moreover, a pair of spaced apart sealing members 32a and 32b are fitted in the outer surface of the control piston 35 in sliding contact with the inner surface of the cylinder bore 33. A lock valve 37 is interposed between the control chamber 34 and a control port 36 provided in the housing 9. The switchover valve means V_{R} is interposed between the control port 36 and the hydraulic control pressure source 27 as well as the reservoir 28.

The switchover valve means V_{R} is composed of a normally open solenoid valve 38 interposed between the control port 36 and the hydraulic control pressure source 27, and a normally closed solenoid valve 39 interposed between the control port 36 and the reservoir 28.

The switchover valve V_{R} can be switched between a state in which the control port 36 is put into communication with the hydraulic control pressure source 27, a state in which the control port 36 is put into communication with the reservoir 28 and a state in which the control port 36 is put out of communication with both the hydraulic control pressure source 27 and the reservoir 28, by switching-over the energization and deenergization of the solenoid valves 38 and 39.

The lock valve 37 comprises a valve bore 40 provided in the housing 9 in communication with the control port 36 and bored at the upper end of the slide bore 12 coaxially with the slide bore 12, a valve seat 41 formed on the housing 9 to surround the end of the valve bore 40 which is open to the slide bore 12, a valve member 43 having at its leading end a rubber valve element 42 capable of sitting on the valve seat 41, and a valve spring 44 for biasing the valve member 43 towards the valve seat 41. The sleeve 22 is coaxially provided at its upper end, with a support bore 45 leading to the control chamber 34. A radially inwardly projecting flange 46 is provided at the end of the support bore 45 which is open to the valve seat 41. The valve member 43 is disposed in the support bore 45 so as to extend through the flange 46. Receiving collars 47 are projectingly provided on the side of the valve member 43 at a plurality of locations circumferentially spaced apart from one another for abutment against the flange 46. The valve spring 44 is mounted in a compressed manner between the receiving collars 47 and the sleeve 22.

In the lock valve 37, in the condition in which a normal hydraulic control pressure is applied from the hydraulic control pressure source 27 to the pilot chamber 25 to thereby move the sleeve 22 to the position shown in Fig.2, the valve member 43 with the receiving collars 47 abutting against the flange 46 is in a position in which the valve element 42 is spaced apart fro: the valve seat 41. When the sleeve 22 is moved upwards in a direction to reduce the volume of the pilot chamber 25 in response to a reduction in hydraulic control pressure in the pilot chamber 25, the valve element 42 sits on the valve seat 41.

The output chamber 48 is defined between the partition wall 16 fixedly disposed in the mounting bore 11 in the housing 9, the lower end face of the large diameter portion 22a of the sleeve 22, and one of the end faces of the control piston 35. The output chamber 48 communicates with the hydraulic braking pressure chamber 8 in the left rear wheel brake cylinder C _{RL} through an output port 49 provided in the housing 9. An input chamber 51 is defined between the partition wall 16 and the support member 17 and communicates with the output port 1a of the master cylinder 1 through an input port 50 provided in the housing 9. A cut-off valve 52 is interposed between the input chamber 51 and the output chamber 48. A disk member 53 is axially movably disposed in the output chamber 48 between the sleeve 22, the control piston 35 and the partition wall 16.

The cut-off valve 52 comprises a valve seat piston 56 generally having the form of a stepped cylinder slidably received in the partition wall 16 and having a valve seat 55 at the end closer to the input chamber 51, a spring 57 for exhibiting a spring force for biasing the valve seat piston 56 towards the output chamber 48, a valve member 58 disposed in the input chamber 51 and biased in a direction so as to sit on the valve seat 55, a rod 59 loosely protruding through the valve seat piston 56 for transmitting the operation of the control piston 35 to the valve member 58, and a stop 60 for defining the maximum amount of movement of the valve member 58 in the direction to sit on the valve seat 55. It should be noted that the rod 59 may be either integral with or separate from the valve member 58.

A guide bore 61 is provided at a central portion of the partition wall 16 coaxially with the control piston 35 to extend between the output chamber 48 and the input chamber 51 and is comprised of a large diameter bore portion 61a closer to the output chamber 48 and a small diameter bore portion 61b closer to the input chamber 51. The bore portions 61a and 61b are coaxially connected to each other. The valve seat piston 56 is composed of a large diameter portion 56a slidably received in the large diameter bore portion 61a, and a small diameter portion 56b slidably received in the small diameter bore portion 61b. The portions 56a and 56b are coaxially connected to each other. A sealing member 62 is fitted over the outer surface of the large diameter portion 56a in sliding contact with the inner surface of the large diameter bore portion 61a. A sealing member 63 is fitted to the inner surface of the small diameter bore portion 61b in sliding contact with the outer surface of the small diameter portion 56b. In this way, the valve seat piston 56 has a pressure-receiving area facing the output chamber 48 which is larger than the pressure-receiving area facing the input chamber 51.

An annular chamber 64 is defined by a step between the large and small diameter bore portions 61a and 61b of the guide bore 61 and a step between the large and small diameter portions 56a and 56b of the valve seat piston 56 and communicates with the outside through a release bore 66 provided in the housing 9, thereby avoiding any variation in hydraulic pressure in the annular chamber 64 in response to the axial movement of the valve seat piston 56.

A radially outwardly projecting collar 67 is provided on the valve seat piston 56 at its end closer to the input chamber 51, and the spring 57 is mounted in a compressed manner between this collar 67 and the support member 17. The valve seat piston 56 is biased towards the output chamber 48 by the spring force of the spring 57, so that the valve seat piston 56 abuts, at its end closer to the output chamber 48, against the disk member 53. Thus, the valve seat piston 56 is operably connected to the second end portion of the sleeve 22 through the disk member 53.

The support member 17 is integrally provided at its closed end with a cylindrical portion 17a projecting into the input chamber 51, and the ring-like stop 60 is fixed to the inner surface of the tip end of the cylindrical portion 17a. The valve member 58 includes a restraining collar 58a capable of abutting against the stop 60, and a drive bar 58b loosely protruding into the valve seat piston 56, and a valve spring 68 is mounted in a compressed manner between the restraining collar 58a and the support member 17 to bias the valve member 58 towards the valve seat 55.

The rod 59 is loosely inserted into the valve seat piston 56 to extend through the disk member 53, so that the upper end thereof abuts against the control piston 35. The lower end of the rod 59 abuts against the drive bar 58b of the valve member 58. The axial length of the rod 59 is set such that, when the rod 59 and the valve seat piston 56 abut against the control piston 35, the valve member 58 abutting against the rod 59 is spaced apart from the valve seat 55 to open the cut-off valve 52.

The construction of the right rear wheel brake hydraulic braking pressure control system M _{RR} is basically the same as the above-described left rear wheel brake hydraulic braking pressure control system M _{RL}.

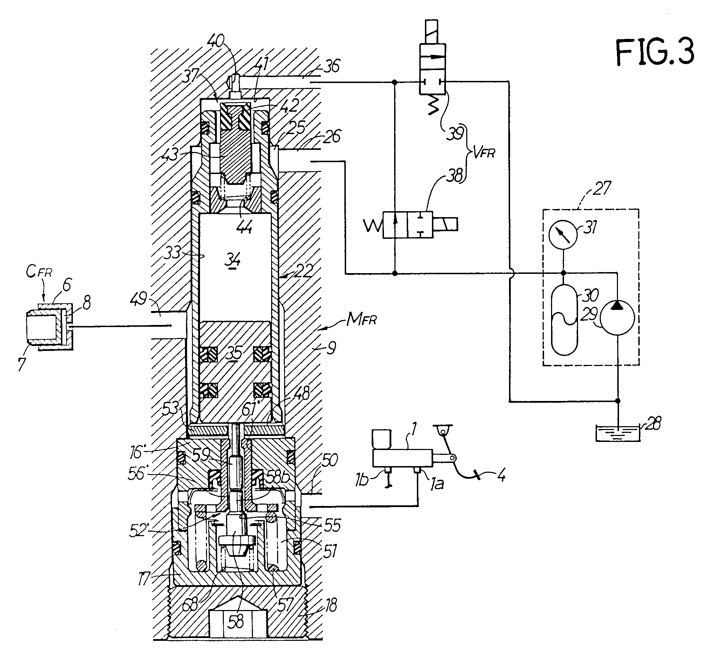

The construction of the right front wheel brake hydraulic braking pressure control system M_{FR} will now be described with reference to Fig. 3. Excluding a portion thereof, the right front wheel brake hydraulic braking pressure control system M_{FR} has basically the same construction as the left and right rear wheel brake hydraulic braking pressure control systems M_{RL} and M_{RR} and hence, only the portion having a different construction will be described. The main section having basically the same construction will be merely shown with components thereof designated by the same reference characters as the left rear wheel brake hydraulic braking pressure control system M _{RL} in Fig.2.

In the right front wheel brake hydraulic braking pressure control system M _{FR}, a guide bore 61' having the same inside diameter over the entire axial length is provided in a partition wall 16' provided in the housing 9 to partition the output chamber 48 and the input chamber 51. A valve seat piston 56' which is a component of a cut-off valve 52' interposed between the output chamber 48 and the input chamber 51 is formed into a cylindrical shape having the same outside diameter over the entire axial length, so that it may be slidably received in the guide bore 61'.

The left front wheel brake hydraulic braking pressure control system M _{FL} has basically the same construction as the right front wheel brake hydraulic braking pressure control system M _{FR}.

The operation of a first embodiment will be described below. During normal braking in which the hydraulic control pressure source 27 is normally operative, the normally open solenoid valves 38 and the normally closed solenoid valves 39 in the switchover valve means V_{FL}, V _{FR} and V_{R} are deenergized. Therefore, the hydraulic control pressure from the hydraulic control pressure source 27 is applied to the pilot chamber 25 in each of the hydraulic braking pressure control systems M _{FL}, M _{FR}, M _{RL} and M_{RR} to thereby move the sleeve 22 to the maximum towards the output chamber 48, and the lock valve 37 is in its opened state. Accordingly, the hydraulic control braking pressure from the hydraulic control pressure source 27 is also applied to the control chamber 34 to thereby move even the control piston 35 to the maximum toward the output chamber 48. In this condition, the disk member 53 is in a state in which it is clamped between the sleeve 22 and the partition wall 16.

Therefore, in each of the left and right front wheel brake hydraulic braking pressure control systems M_{FL} and M_{FR}, the valve member 58 of the cut-off valve 52' is in a valve-opening position in which the valve member 58 is spaced from the valve seat 55 as a result of the drive bar 58b being moved by the control piston 35 and the rod 59. If the brake pedal 4 is depressed to effect a braking in such a condition, the hydraulic braking pressure delivered from the output ports 1a and 1b of the master cylinder 1 is passed through the input port 50, the input chamber 51, the cut-off valve 52', the output chamber 48 and the output port 49 and is applied to each of the left and right front wheel brake cylinders C _{FL} and C _{FR}.

On the other hand, in each of the left and right rear wheel brake hydraulic braking pressure control systems M _{RL} and M_{RR}, at an initial stage in which the hydraulic braking pressure delivered from the output ports 1a and 1b of the master cylinder 1 is applied to the input chamber 51 with the control piston 35 moved to the maximum towards the output chamber 48, the drive bar 58b has been urged away from the valve seat 55 by the control piston 35 and the rod 59, and the cut-off valve 52 is in its opened state. Accordingly, the hydraulic braking pressure from the output ports 1a and 1b is applied to the input chamber 51 and then passes through the cut-off valve 52, the output chamber 48 and the output port 49 and is applied to each of the left and right rear wheel brake cylinders C _{RL} and C_{RR}.

However, in the valve seat piston 56 of the cut-off valve 52, the pressure-receiving area facing the output chamber 48 is larger than the pressure-receiving area facing the input chamber 51. Thus, when the pressures in the input chamber 51 and the output chamber 48 are the same as each other, the hydraulic pressure generates a force biasing the valve seat piston 56 towards the input chamber 51. When the hydraulic pressure for biasing the valve seat piston 56 towards the input chamber 51 overcomes the spring force of the spring 57, the valve seat piston 56 is caused to move towards the input chamber 51, so that the valve member 58 sits on the valve seat 55 to close the cut-off valve 52. When the hydraulic pressure in the input chamber 51 is increased with the cut-off valve 52 in the closed state, the valve seat piston 56 moves towards the output chamber 48 to open the cut-off valve 52. By such opening and closing of the cut-off valve 52 by the axial reciprocal movement of the valve seat piston 56, the hydraulic pressure applied to the input chamber 51 is reduced at a given proportion and applied to the output chamber 48. Therefore, the hydraulic braking pressure delivered from the output ports 1a and 1b is reduced at a given proportion in each of the left and right rear wheel brake hydraulic braking pressure control systems M _{RL} and M _{RR} and applied to each of the left and right rear wheel brake cylinders C _{RL} and C _{RR} . This eliminates the need for a conventional proportional pressure-reducing valve.

When the braking force is to be reduced in response to a wheel being about to become locked during such a braking, e.g., when the braking force for the left and right rear wheels W _{RL} and W_{RR} is to be reduced, the normally-open and normally-closed solenoids 38 and 39 of the switchover valve V_{R} are energized. This causes the control chambers 34 in the left and right rear wheel brake hydraulic braking pressure control systems M_{RL} and M_{RR} to be put into communication with the reservoir 28, so that the hydraulic pressure in the control chambers 34 is reduced. Thus, the control piston 35 is urged by the hydraulic pressure in the output chamber 48 in the direction to increase the volume of the output chamber 48. In this case, the valve member 58 and the rod 59 biased by the spring 68 are also moved in a manner to follow the movement of the control piston 35, so that the valve member 58 sits on the valve seat 55 to close the cut-off valve 52. This increase in the volume of the output chamber 48 reduces the hydraulic braking pressure in each of the left and right rear wheel brake cylinders C _{RL} and C _{RR} .

When the braking force is to be maintained with the normally-open solenoid valve 38 energized, the normally-closed solenoid valve 39, may be deenergized to cut off the communication of the control chamber 34 with the reservoir 28, so that the control piston 35 may be maintained at a given position.

Further, when the braking force is to be increased again, both of the normally-open and normally-closed solenoid valves 38 and 39 may be deenergized, thereby allowing the hydraulic control pressure from the hydraulic control pressure source 27 to be applied to the control chamber 34. Then, the control piston 35 is moved again in the direction to reduce the volume of the output chamber 48, with the result that the rod 59 is moved by the control piston 35, and the valve member 58 is moved by the rod 59, thereby opening the cut-off valve 52. This causes the input chamber 51 to be put into communication with the output chamber 48.

When the hydraulic control pressure source 27 malfunctions and causes a defect in hydraulic control pressure, the valve seat piston 56, 56' in each of the hydraulic braking pressure control systems M_{FL}, M _{FR}, M _{RL} and M_{RR} is moved, by the spring force of the spring 57, upwardly as viewed in Figs.2 and 3, i.e., in a direction to move the disk member 53 and the sleeve 22 as well as the control piston 35 so as to reduce the volume of the pilot chamber 25. In this case, in the cut-off valve 52, 52', the valve member 58 is biased by the action of the valve spring 68, but the movement of the valve member 58 is restrained by the stop 60. Valve member 58 is thus spaced away from the valve seat 55 so that the cut-off valve 52, 52' is open. For this reason, when the hydraulic braking pressure delivered from the output ports 1a and 1b in the master cylinder 1 is applied to the input chamber 51 in response to braking, such hydraulic braking pressure is applied to the output chamber 48, so that the hydraulic braking pressure can be applied to each of the brake cylinders C _{FL}, C _{FR}, C _{RL} and C_{RR} through the output port 49.

Moreover, the lock valve 37 is closed by the movement of the sleeve 22 in the direction which reduces the volume of the pilot chamber 25, avoiding the release of hydraulic pressure from the control chamber 34 more than necessary. This ensures that the volume of the output chamber 48 cannot be increased more than necessary, and it is possible to easily ensure a braking force in each of the brake cylinders C_{FL}, C _{FR}, C _{RL} and C_{RR}.

When hydraulic control pressure fails in the middle of braking, the sleeve 22 and the control piston 35 are moved by the hydraulic pressure in the output chamber 48. This causes the lock valve 37 to be closed and, in the cut-off valve 52, 52', the valve member 58 biased by the valve spring 68 sits on the valve seat 55 to move the valve seat piston 56. However, the amount of movement of the valve member 58 is likewise restrained by the stop 60, whereas the valve piston 56, 56' can be further moved and therefore the cut-off valve 52, 52' can be brought into its opened state, thereby ensuring a continuous braking force.

Further, even when hydraulic control pressure fails in the middle of anti-lock control for the front and rear wheels, an operation similar to that described above is conducted. However, since, in the valve seat piston 56 of the cut-off valve 52, the pressure-receiving area facing the output chamber 48 in each of the rear brake hydraulic braking pressure control systems M _{RR} and M_{RL} is larger than that in each of the front brake hydraulic braking pressure control systems M _{FR} and M_{FL}, the beginning of the movement of the sleeve 22 and the control piston 35 in each of the rear wheel brake hydraulic braking pressure control systems M _{RR} and M_{FL} is delayed relative to that in each of the front wheel brake hydraulic braking pressure control systems M _{FR} and M_{FL}, and closing of the lock valve 37 and opening of the cut-off valve 52 in each of the rear brake hydraulic braking pressure control systems M _{RR} and M_{RL} are also delayed relative to those in each of the front brake hydraulic braking pressure control systems M_{FR} and M_{FL}. Therefore, even if the front and rear wheels become locked again by application of the hydraulic braking pressure from the master cylinder 1, the time when the rear wheels become locked can be delayed relative to the time when the front wheels become locked. This makes it possible to ensure stability in direction of the vehicle.

A second embodiment of the present invention will now be described, wherein parts corresponding to those in the first embodiment are designated by the same reference numerals and characters.

Referring first to Figs.4 and 5, a lock valve 69 is interposed between the control chamber 34 and the switchover valve V_{R} in a left rear wheel brake hydraulic braking pressure control system M_{RL}. The lock valve 69 comprises a valve seat member 71 fitted in the housing 9 and having a valve bore 70 communicating with the control port 36, a valve member 73 capable of sitting on a valve seat 72 provided on the valve seat member 71 at the end of the valve bore 70 which is closer to sleeve 22, and a valve spring 74 for biasing the valve member 73 in a direction so that it sits on the valve seat 72. A radially inwardly projecting flange 76 is provided on the sleeve 22 at that end of a support bore 75 which is closer to the valve seat member 71. The valve member 73 is disposed in the support bore 75 so as to extend through the flange 76, and receiving collars 77 are projectingly provided at the side of the valve member 73 at a plurality of circumferentially spaced apart locations so as to be capable of abutting against the flange 76. The valve spring 74 is mounted in a compressed manner between the receiving collars 77 and the sleeve 22.

In such a lock valve 69, the valve member 73 sits on the valve seat 72 to close the lock valve as a result of movement of the sleeve 22 toward the valve seat member 71 in response to a reduction in the hydraulic control pressure in the pilot chamber 25.

A cut-off valve 82 is interposed between the output chamber 48 and the input chamber 51 and comprises a valve seat piston 83 slidably received in the partition wall 16 and having valve seat 55 at its end closer to input chamber 51, spring 57 for biasing the valve seat piston 83 towards the output chamber 48, valve member 58 disposed in the input chamber 51 and spring-biased in a direction so as to sit on the valve seat 55, a rod 84 inserted through the valve seat piston 83 to transmit the operation of the control piston 35 to the valve member 58, and stop 60 for restricting the amount of movement of the valve member 58 in the direction towards the valve seat 55.

A through-hole 85 is provided in the central portion of the disk member 53 and leads to the output chamber 48. It has an inside diameter smaller than that of large diameter bore portion 61a of guide bore 61 in the partition wall 16. The valve seat piston 83 is composed of a first cylindrical portion 83a slidably received in a small diameter bore portion 61b of the guide bore 61, a second cylindrical portion 83b having a diameter larger than that of the first cylindrical portion 83a and slidably received in the large diameter bore portion 61a of the guide bore 61, a third cylindrical portion 83c having a diameter larger than that of the through-hole 85 and smaller than that of the large diameter bore portion 61a, and a fourth cylindrical portion 83d loosely passing through the through-hole 85. The portions 83a to 83d are coaxially connected to one another. A sealing member 62 is fitted over the outer surface of the second cylindrical portion 83b in sliding contact with the inner surface of the large diameter bore portion 61a, and a sealing member 63 is fitted in that end of the small diameter bore portion 61b which is closer to the input chamber 51 and is in sliding contact with the outer surface of the first cylindrical portion 83a of the valve seat piston 83.

The above construction ensures that, in the valve seat piston 83, the pressure-receiving area facing the output chamber 48 is larger than the pressure-receiving area facing the input chamber 51.

The rod 84 protruding through the valve seat piston 83 between the control piston 35 and the valve member 58 is composed of a large diameter portion 84a and a small diameter portion 84b which are coaxially connected to each other in sequence from the side closer to the valve member 58. The large diameter portion 84a defines a through hole forming an annular flow passage 86 between the large diameter portion 84a itself and the inner surface of the valve seat piston 83 together with drive bar 58b of the valve member 58. The small diameter portion 84b movably passes through a collar 87 projectingly provided on the inner surface of the valve seat piston 83, and an annular orifice 88 is defined between the outer surface of the small diameter portion 84b and the inner surface of the collar 87. Further, a plurality of communication passages 89 is provided in a side wall of the fourth cylindrical portion 83d of the valve seat piston 83. Thus, when the cut-off valve 82 is open, the input chamber 51 communicates with the output chamber 48 through the annular flow passage 86, the orifice 88 and the communication passages 89.

A passage 90 is provided between the annular flow passage 86 and the output chamber 48 by-passing the orifice 88, and an on-off valve 91 is mounted in the middle of the passage 90. More specifically, the axial length of the fourth cylindrical portion 83d of the valve seat piston 83 is set such that, with the fourth cylindrical portion 83d in abutment against the control piston 35, the region between the third cylindrical portion 83c and the fourth cylindrical portion 83d is spaced away from the disk member 53. In this condition, a flow passage 92 leading to the output chamber 48 is defined between the disk member 53, the partition wall 16 and the valve seat piston 83. A communication passage 93 is also provided in the third cylindrical portion 83c of the valve seat piston 83 for permitting the annular flow passage 86 to communicate with the flow passage 92, and the passage 90 parallel to the orifice 88 is constituted by the flow passage 92 and the communication passage 93.

The on-off valve 91 is composed of a valve member portion 94 formed by the step at the region between the third and fourth cylindrical portions 83c and 83d of the valve seat piston 83, and a valve seat portion 95 formed on the disk member 53 in opposed relation to the valve member portion 94 and surrounding the through-hole 85.

A right front wheel brake hydraulic braking pressure control system M_{FR}' will now be described with reference to Fig.6. In this right front wheel brake hydraulic braking pressure control system M_{FR}', a valve seat piston 83' which is a component of a cut-off valve 82' interposed between output chamber 48 and input chamber 51 is basically formed in a cylindrical shape with the a pressure-receiving area facing the output chamber 48 being equal to the pressure-receiving area facing the input chamber 51. The other arrangements are basically the same as those in the above-described left rear wheel brake hydraulic braking pressure control system M _{RL} '.

With the second embodiment, if, after the braking force is reduced in response to a wheel being about to become locked, a hydraulic control pressure from the hydraulic control pressure source 27 is applied to the control chamber 34 to increase the braking force again, the control piston 35 is then moved in a direction so as to reduce the volume of the output chamber 48. At an initial stage of movement of the control piston 35 towards the disk member 53, the on-off valve 91 is in its closed state, i.e. the valve seat piston 83, 83' abuts against the disk member 53, and the cut-off valve 82, 82' is in its closed state, i.e., the rod 84 is in a state in which it projects to a location nearer to the output chamber 48 than to the valve seat piston 83, 83'. In response to the movement of the control piston 35 towards the disk member 53, the rod 84 is first moved by the control piston 35, and the valve member 58 is moved away from the valve seat 55 by the rod 84 to open the cut-off valve 82, 82'. This causes the input chamber 51 to be put into communication with the output chamber 48 through the annular flow passage 86, the orifice 88 and the communication passages 89. Then, the further movement of the control piston 35 toward the disk member 53 causes the valve seat piston 83, 83' to be moved by the control piston 35, so that the valve member portion 94 is moved away from the valve seat portion 95 to open the on-off valve 91. Thus, when the braking force is to be increased again, the cut-off valve 82, 82' is first opened to put the input chamber 51 into communication with the output chamber 48 through the orifice 88, add the on-off valve 91 is then opened, thereby causing the input chamber 51 to be put into communication with the output chamber 48 through the passage 90 parallel to the orifice 88.

The variation in braking pressure during such an anti-lock control operation will be described in connection with Fig.7. When the output hydraulic pressure from the master cylinder 1 is indicated by dashed line A, the hydraulic braking pressure in each of the brake cylinders C_{FL}, C _{FR}, C _{RL} and C_{RR} is varied as shown by the solid line B and can be controlled by the hydraulic braking pressure control system M_{FL}', M_{RL}' so that it would not largely exceed a hydraulic pressure C corresponding to a given slip rate. During the re-increasing of the hydraulic braking pressure after reduction, a rapid flow of working liquid from the input chamber 51 into the output chamber 48 is avoided because, after opening of the cut-off valve 82, 82' to permit communication between the input chamber 51 and the output chamber 48 through the orifice 88, the on-off valve 91 is opened later to permit the communication between the input chamber 51 and the output chamber 48 through the passage 90 parallel to the orifice 88, as described above. This ensures that the braking force can be increased while preventing a disordered breaking impression for the driver as a result of a rapid depression of the brake pedal 4.

As in the previously-described first embodiment, the cut-off valve 82 in the left rear wheel brake hydraulic braking pressure control system M _{RL}' has a pressure-reducing function. In this way, the second embodiment provides, in addition to the effect of the previous first embodiment, the effect that the driver does not have the impression that there is a braking defect as a result of a rapid depression of the brake pedal 4 during re-increasing of the braking pressure.

## Claims

1. A control device for a hydraulic brake, comprising
an output chamber (48) defined in a housing (9) for connection to a rear wheel brake cylinder;
a control chamber (34) defined in the housing (9) and capable of being connected to a hydraulic control pressure source (27) and a reservoir (28) through a switchover valve means (38,39) operable to selectively connect and disconnect the hydraulic control pressure source (27) and the reservoir (28);
a control piston (35) having opposite ends facing the output chamber (48) and the control chamber (34) respectively;
a partition wall (16) provided in the housing partitioning the output chamber (48) from an input chamber (51) which is defined in the housing (9) for connection to a master cylinder (1); and
a cut-off valve (52)(82) interposed between the said input and output chambers (51,48) and adapted to be closed in response to movement of the control piston (35) towards the control chamber (34), wherein
the cut-off valve (52)(82) includes a valve seat piston (56)(83) having a valve seat (55) at the input chamber end and being of generally stepped-cylindrical form so that its pressure-receiving area facing the input chamber (51) is smaller than its pressure - receiving area facing the output chamber (48);
a valve member (58) is disposed in the input chamber (51) and is biased in a direction towards the valve seat (55);
a rod (59) transmits the operation of the control piston (35) to the valve member (58); and
a spring (57) is interposed between the housing (9) and the valve set piston (56)(83) so as to bias the valve seat piston (56) towards the output chamber (48); characterised in that
the valve seat piston (56)(83) is moveable in a direction away from the valve member (58) in response to a reduction in hydraulic pressure from the hydraulic control pressure source (27); and
the cut-off valve (52)(82) further includes a stop (60) provided between the housing (9) and the valve member (58) so as to restrain movement of the valve member (58) in said direction at a position where the valve member (58) is spaced from the valve seat (55) when the valve seat piston (56)(83) moves away from the valve member (58) in response to the reduction in hydraulic pressure from the hydraulic control pressure source (27).

2. A control device according to claim 1 and further including:
a sleeve (22) slidably received in the housing (9), wherein a first of the opposite end portions of the sleeve (22) faces a pilot chamber (25) leading to the control hydraulic pressure source (27), a second of the opposite end portions of the sleeve (22) faces the said output chamber (48), and the control piston (35) is slidably received in the sleeve (22) so that one of its opposite end portions faces the output chamber (48) and another of its opposite end portions faces the control chamber (34) which is defined between the control piston (35) and the sleeve (22); and
a lock valve (27) interposed between the control chamber (34) and the switchover valve means (38,39) and adapted to be closed in response to movement of the sleeve (22) in a direction reducing the volume of the pilot chamber (25), therein
the valve seat piston (56)(83) is slidably received in the partition wall (16) so that the end of the valve seat piston (58)(83) closer to the output chamber (48) can be operatively connected to said second of the opposite end portions of the sleeve (22) and the spring (57) interposed between the housing (9) and the valve seat piston (56)(83) provides an operative connection between the valve seat piston (56)(83) and said second of the opposite end portions of the sleeve (22).

3. A control device according to claim 1 or 2, further including a passage (93) and an orifice (88) provided in parallel with each other between the cut-off valve (82) and the output chamber (48), an on-off valve (91) being provided in the said passage (93) and adapted to open after the cut-off valve (82) opens.

4. A control device according to claim 3, wherein the input and output chambers (51,48) are connected to each other by a through-hole (86) provided in the valve seat piston (83), and the said orifice (88) is defined by a rod (84) inserted through the through-hole and the inner surface of the through-hole.

5. A hydraulic braking system including a brake master cylinder (1), a hydraulic pressure source (27), a front brake (C_{FL}) and a rear brake (C_{RL}), the rear brake having associated with it a control device as claimed in any preceding claim.

## Patentansprüche

1. Steuervorrichtung für eine hydraulische Bremse, umfassend:
eine in einem Gehäuse (9) zur Verbindung mit einem Hinterradbremszylinder ausgebildete Auslaßkammer (48);
eine Steuerkammer (34), welche in dem Gehäuse (9) ausgebildet ist und mit einer hydraulischen Steuerdruckquelle (27) und einem Speicher (28) durch ein Umschaltventilmittel (38, 39) verbunden werden kann, welches zum wahlweisen Verbinden und Unterbrechen der Verbindung der hydraulischen Steuerdruckquelle (27) und des Speichers (28) betätigbar ist;
einen Steuerkolben (35) mit entgegengesetzten Enden, welche der Auslaßkammer (48) bzw. der Steuerkammer (34) zugewandt sind;
eine in dem Gehäuse vorgesehene Trennwand (16), welche die Auslaßkammer (48) von einer Einlaßkammer (51) trennt, welche in dem Gehäuse (9) zur Verbindung mit einem Geberzylinder (1) ausgebildet ist; und
ein Unterbrechungsventil (52)(82), welches zwischen der Einlaß- und der Auslaßkammer (51, 48) angeordnet ist und dazu geeignet ist, in Antwort auf eine Bewegung des Steuerkolbens (35) auf die Steuerkammer (34) zu geschlossen zu werden, worin
das Unterbrechungsventil (52)(82) einen Ventilsitzkolben (56)(83) umfaßt, welcher einen Ventilsitz (55) an dem Einlaßkammerende aufweist und von im allgemeinen abgestufter zylindrischer Form ist, so daß seine der Einlaßkammer (51) zugewandte Druckaufnahmefläche kleiner ist als seine der Auslaßkammer (48) zugewandte Druckaufnahmefläche;
ein Ventilelement (58) in der Einlaßkammer (51) angeordnet ist und in Richtung auf den Ventilsitz (55) zu vorgespannt ist;
eine Stange (59) den Betrieb des Steuerkolbens (35) auf das Ventilelement (58) überträgt; und
eine Feder (57) zwischen dem Gehäuse (9) und dem Ventilsitzkolben (56)(83) angeordnet ist, um den Ventilsitzkolben (56) auf die Auslaßkammer (48) zu vorzuspannen,
dadurch gekennzeichnet, daß
der Ventilsitzkolben (56)(83) in Antwort auf eine Verringerung eines hydraulischen Druckes von der hydraulischen Steuerdruckquelle (27) in einer Richtung vom Ventilelement (58) weg bewegbar ist; und
das Unterbrechungsventil (52)(82) ferner einen Anschlag (60) umfaßt, welcher zwischen dem Gehäuse (9) und dem Ventilelement (58) vorgesehen ist, um eine Bewegung des Ventilelements (58) in der Richtung an einer Position zu hemmen, wo das Ventilelement (58) von dem Ventilsitz (55) einen Abstand aufweist, wenn der Ventilsitzkolben (56)(83) sich in Antwort auf die Verringerung des hydraulischen Druckes von der hydraulischen Steuerdruckquelle (27) von dem Ventilelement (58) weg bewegt.

2. Steuervorrichtung nach Anspruch 1, ferner umfassend:
eine in dem Gehäuse (9) verschiebbar aufgenommene Hülse (22), worin ein erster der entgegengesetzten Endabschnitte der Hülse (22) einer Servokammer (25) zugewandt ist, welche zu der hydraulischen Steuerdruckquelle (27) führt, ein zweiter der entgegengesetzten Endabschnitte der Hülse (22) der Auslaßkammer (48) zugewandt ist, und der Steuerkolben (35) verschiebbar in der Hülse (22) aufgenommen ist, so daß einer seiner entgegengesetzten Endabschnitte der Auslaßkammer (48) zugewandt ist und ein anderer seiner entgegengesetzten Endabschnitte der Steuerkammer (34) zugewandt ist, welche zwischen dem Steuerkolben (35) und der Hülse (22) gebildet ist; und
ein zwischen der Steuerkammer (34) und dem Umschaltventilmittel (38, 39) angeordnetes Sperrventil (27), welches in Antwort auf eine Bewegung der Hülse (22) in einer Richtung, welche das Volumen der Servokammer (25) verringert, geschlossen werden kann, worin
der Ventilsitzkolben (56)(83) verschiebbar in der Trennwand (16) aufgenommen ist, so daß das Ende des Ventilsitzkolbens (58)(83), welches der Auslaßkammer (48) näher ist, betriebsmäßig mit dem zweiten der entgegengesetzten Endabschnitte der Hülse (22) verbunden werden kann und die zwischen dem Gehäuse (9) und dem Ventilsitzkolben (56)(83) angeordnete Feder (57) eine betriebsmäßige Verbindung zwischen dem Ventilsitzkolben (56)(83) und dem zweiten der entgegengesetzten Endabschnitte der Hülse (22) vorsieht.

3. Steuervorrichtung nach Anspruch 1 oder 2, ferner umfassend einen Durchlaß (93) und eine Öffnung (88), welche parallel zueinander zwischen dem Unterbrechungsventil (82) und der Auslaßkammer (48) vorgesehen sind, wobei ein An-Aus-Ventil (91) in dem Durchlaß (93) vorgesehen ist und dazu geeignet ist, sich zu öffnen, nachdem das Unterbrechungsventil (82) sich geöffnet hat.

4. Steuervorrichtung nach Anspruch 3, worin die Einlaß- und die Auslaßkammer (51, 48) miteinander durch ein Durchgangsloch (86) verbunden sind, welches in dem Ventilsitzkolben (83) vorgesehen ist, und wobei die Öffnung (88) durch eine Stange (84), welche durch das Durchgangsloch eingeführt ist, und die innere Oberfläche des Durchgangslochs festgelegt ist.

5. Hydraulisches Bremssystem, umfassend einen Bremsgeberzylinder (1), eine Hydraulikdruckquelle (27), eine vordere Bremse (C_{FL}) und eine hintere Bremse (C_{RL}), wobei der hinteren Bremse eine Steuervorrichtung nach einem der vorangehenden Ansprüche zugeordnet ist.

## Revendications

1. Dispositif de commande pour un frein hydraulique, qui comprend :
- une chambre de sortie (48) définie dans un corps (9) à coupler au cylindre de frein d'une roue arrière,
- une chambre de commande (34) définie dans le corps (9) et pouvant être couplée à une source (27) de pression de commande hydraulique et à un réservoir (28) par l'intermédiaire d'un moyen (38, 39) formant vanne de commutation utilisable pour sélectivement accoupler et désaccoupler la source (27) de pression de commande hydraulique et le réservoir (28),
- un piston de commande (35) ayant des extrémités opposées qui font respectivement face à la chambre de sortie (48) et à la chambre de commande (34),
- une paroi de séparation (16) placée dans le corps, qui sépare la chambre de sortie (48) d'une chambre d'entrée (51) définie dans le corps (9) en vue d'une connexion à un maître-cylindre (1), et
- une valve de coupure (52), (82) interposée entre lesdites chambres d'entrée et de sortie (51, 48) et capable de se fermer en réponse au déplacement du piston de commande (35) vers la chambre de commande (34),
dans lequel :
la valve de coupure (52), (82) contient un piston de siège de vanne (56), (83) comportant un siège de vanne (55) au niveau de l'extrémité de la chambre d'entrée et étant généralement de forme cylindrique étagée de sorte que sa surface de réception de la pression qui fait face à la chambre d'entrée (51) soit plus petite que sa surface de réception de la pression qui fait face à la chambre de sortie (48),
un obturateur (58) est placé dans la chambre d'entrée (51) et est poussé en direction du siège de vanne (55),
une tige (59) transmet le fonctionnement du piston de commande (35) à l'obturateur (58), et
un ressort (57) est intercalé entre le corps (9) et le piston de siège de vanne (56), (83) pour pousser le piston de siège de vanne (56) vers la chambre de sortie (48),
caractérisé en ce que :
- le piston de siège de vanne (56), (83) peut être déplacé à l'écart de l'obturateur (58) en réponse à une diminution de la pression hydraulique provenant de la source (27) de pression de commande hydraulique, et
- la valve de coupure (52), (82) contient en outre une butée (60) placée entre le corps (9) et l'obturateur (58) pour limiter le déplacement de l'obturateur (58) dans ladite direction, en une position où l'obturateur (58) est espacé du siège de vanne (55), quand le piston de siège de vanne (56), (83) s'éloigne de l'obturateur (58) en réponse à la diminution de la pression hydraulique en provenance de la source (27) de pression de commande hydraulique.

2. Dispositif de commande selon la revendication 1, comprenant en outre :
- un manchon (22) reçu de manière coulissante dans le corps (9), sachant qu'une première des parties d'extrémités opposées du manchon (22) fait face à une chambre pilote (25) conduisant à la source (27) de pression de commande hydraulique, qu'une seconde des parties d'extrémités opposées du manchon (22) fait face à ladite chambre de sortie (48) et que le piston de commande (35) est reçu de manière coulissante dans le manchon (22) de sorte que l'une de ses parties d'extrémité opposées soit en face de la chambre de sortie (48) et que l'autre de ses parties d'extrémité opposées soit en face de la chambre de commande (34) qui est définie entre le piston de commande (35) et le manchon (22), et
- une valve de blocage (27) interposée entre la chambre de commande (34) et le moyen (38, 39) formant vanne de commutation en étant apte à se fermer en réponse au déplacement du manchon (22) dans un sens qui réduit le volume de la chambre pilote (25), sachant que le piston de siège de vanne (56), (83) est reçu de manière coulissante dans la paroi de séparation (16) de sorte que l'extrémité du piston de siège de vanne (56), (83) la plus proche de la chambre de sortie (48) puisse être couplée opérationnellement à ladite seconde des parties d'extrémité opposées du manchon (22) et que le ressort (57) intercalé entre le corps (9) et le piston de siège de vanne (56), (83) procure une liaison opérationnelle entre le piston de siège de vanne (56, 83) et ladite seconde des parties d'extrémité opposées du manchon (22).

3. Dispositif de commande selon la revendication 1 ou 2, comprenant en outre un passage (93) et un orifice (88) disposés parallèlement l'un à l'autre entre la valve de coupure (82) et la chambre de sortie (48), une valve de coupure (91) étant placée dans ledit passage (93) et étant apte à s'ouvrir après l'ouverture de la valve de coupure (82).

4. Dispositif de commande selon la revendication 3, dans lequel les chambres d'entrée et de sortie (51, 48) sont couplées l'une à l'autre par un trou traversant (86) ménagé dans le piston de siège de vanne (83) et ledit orifice (88) est défini par une tige (84) introduite dans le trou traversant et par la surface intérieure du trou traversant.

5. Système de freinage hydraulique qui comprend un maître cylindre (1), une source (27) de pression hydraulique, un frein avant (C_{FL}) et un frein arrière (C_{RL}), un dispositif de commande tel que revendiqué dans l'une quelconque des précédentes revendications étant associé au frein arrière.
